# EUROPÄISCHE PATENTSCHRIFT

(11) **EP 1 488 965 B1**
(45) Veröffentlichungstag und Bekanntmachung des Hinweises auf die Patenterteilung: **15.11.2006**
(21) Anmeldenummer: 03013633.7
(22) Anmeldetag: 16.06.2003
(51) Int. Cl.: B60R 21/13, B60R 21/34

(54) **Vorrichtung zur Auslösung eines schnell beweglichen Bauteiles**
Device for triggering a quickly movable component
Dispositif pour declencher un composant se deplacant rapidement

(43) Veröffentlichungstag der Anmeldung: 22.12.2004
(73) Patentinhaber: THOMAS MAGNETE GmbH, 57562 Herdorf (DE)
(72) Erfinder: Hamm, Wolfgang, 57520 Mauden (DE); Becker, Christian, 57290 Neunkirchen (DE); Ermert, Markus, 57299 Burbach (DE); Mohncke, Christian, 57567 Daaden (DE)
(74) Vertreter: Grosse, Wolf-Dietrich Rüdiger

(56) Entgegenhaltungen:
- EP-A- 0 916 552
- DE-A- 10 034 523
- DE-A- 19 821 594
- DE-A- 19 830 407

## Beschreibung

Die Erfindung betrifft eine Vorrichtung zur Auslösung von schnell beweglichen Bauteilen, insbesondere von Sicherheitsbauteilen, nach dem Oberbegriff des Anspruchs 1.

Die DE 198 21 594 A1 zeigt eine Vorrichtung, die zum Auslösen eines Überrollbügels eines Cabriolet-Fahrzeugs bei einem Überschlag dient. Diese umfasst drei sich in Haltestellung gegeneinander abstützende Schwenkhebel. Dabei muss sichergestellt sein, dass eine ungewollte Auslösung, etwa durch Erschütterungen bei Überfahren von Schlaglöchern, ausgeschlossen ist, andererseits jedoch die erforderliche Auslösekraft und der erforderliche Auslöseweg für die Vorrichtung so gering wie möglich ist, um den auslösenden Aktor klein und leicht halten zu können und die Auslösegeschwindigkeit so groß wie möglich einstellen zu können.

Die DE 100 34 523 A zeigt die Merkmale des Oberbegriffs des Anspruchs 1.

Der Erfindung liegt die Aufgabe zugrunde, eine Vorrichtung der genannten Art zu verbessern.

Die Erfindung löst diese Aufgabe durch eine Vorrichtung mit den Merkmalen des Anspruchs 1. Hinsichtlich vorteilhafter Ausgestaltungen wird auf die abhängigen Ansprüche verwiesen.

Erfindungsgemäß ist nach Anspruch 1 mit der von einem Drehmoment durch weitere Hebel unbelasteten Anordnung des Betätigungshebels in Haltestellung sichergestellt, dass der auslösende Aktor, etwa ein Elektromagnet, nicht gegen ein solches Drehmoment anarbeiten muss. Der Aktor kann daher bei kleiner und leichter Ausbildung und kurzem Hubweg eine schnelle Auslösung gewährleisten. Zudem ist in Ermangelung eines Drehmoments die Abstützung eines Zwischenhebels selbststabilisierend, so dass eine ungewollte Auslösung zuverlässig ausgeschlossen ist.

Wenn sich erfindungsgemäss das Verriegelungsglied in Haltestellung mittelbar über einen oder mehrere Zwischenhebel derart abstützt, dass auf diesen eine in der Ebene seiner Drehachse orientierte Kraft einwirkt, kann ein Drehmoment auf den Betätigungshebel zuverlässig vermieden werden. Die Krafteinleitung verläuft dann auf das Zentrum der Drehachse zu, so dass kein Gesamtdrehmoment auf diesen Hebel resultiert.

Bei Ausbildung einer Kette nach Art eines Getriebes durch das Verriegelungsglied und den oder die weiteren Hebel in Haltestellung, wobei eine große im Auslösesinn wirkende Kraft des Bauteils am Verriegelungsglied in eine kleine Kraft an der zu haltenden Seite des Betätigungshebels übersetzt wird, kann die erforderliche Auslösekraft durch den Aktor sehr gering gehalten werden.

Eine sehr vibrations- und schockfeste Ausbildung ergibt sich, wenn das Verriegelungsglied von einem Schwenkhebel gebildet ist, der sich in Haltestellung über einen schwenkbaren und die Bewegung des Verriegelungsglieds sperrenden Zwischenhebel an dem Betätigungshebel abstützt.

Eine Reversibilität der Vorrichtung von der Auslösestellung in die Haltestellung ist etwa durch mechanischen Druck auf die Hebel möglich, welche durch diesen Druck wieder in die Haltestellung zurückgesetzt werden, so dass im Unterschied zu explosionsgetriebenen Auslösungen die Kosten für die Auslösung einer erfindungsgemäßen Vorrichtung gering sind.

Dabei ist insbesondere in Verbindung mit der Reversibilität eine Ausweitung von schnell auslösenden Systemen auf mehrere Stellen im Kraftfahrzeug sinnvoll, etwa um durch eine sich bereichsweise anhebende Motorhaube eine Knautschzone für anprallende Fußgänger oder Zweiradfahrer schaffen zu können.

Eine modulare Ausbildung gemäß Anspruch 14 stellt sicher, daß die Montagekosten gering gehalten werden können. Zudem ist die Zuverlässigkeit der Vorrichtung dadurch erhöht, daß die Lage der auslösenden Hebel und der federbelasteten Baueinheit nicht beim Einbau gegeneinander justiert werden müssen, sondern das fertig eingerichtete und justierte Modul kann insgesamt bei der Montage in das Kraftfahrzeug eingesetzt werden. Zudem ist bei der Einsetzung des vorgespannten Moduls die Gefahr einer Fehlauslösung gegenüber einer erst noch beim Einbau zu spannenden Feder vermindert.

Weitere Vorteile und Merkmale der Erfindung ergeben sich aus in der Zeichnung dargestellten und nachfolgend beschriebenen Ausführungsbeispielen des Gegenstandes der Erfindung.

In der Zeichnung zeigt:
- Fig. 1: eine Gesamtansicht einer erfindungsgemäßen Vorrichtung,

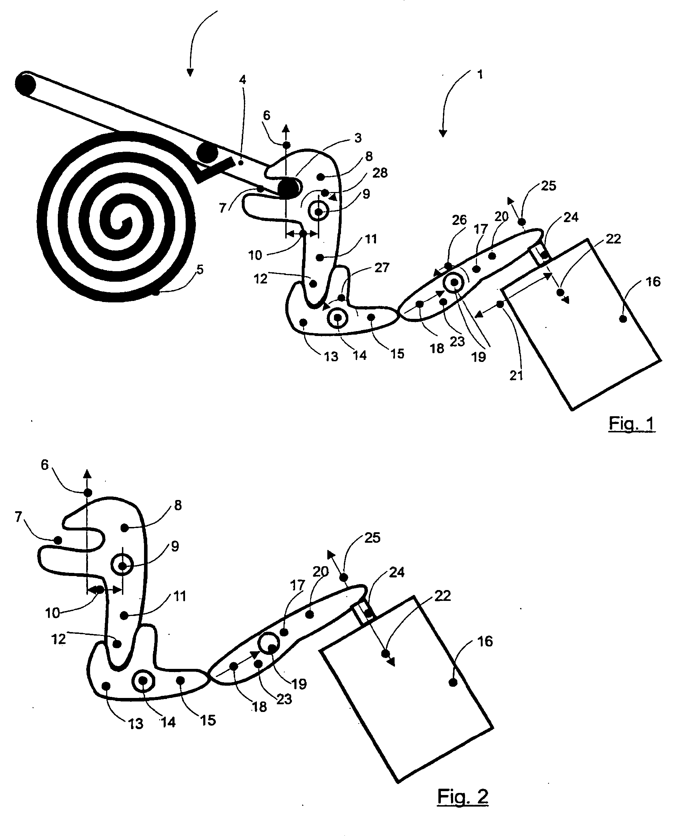

- Fig. 2: eine schematische Ansicht der in der Vorrichtung wirksamen Hebel in Haltestellung gemäß einem ersten Ausführungsbeispiel,
- Fig. 3: eine Detaildarstellung eines Verriegelungsglieds mit eingezeichneter Kraft durch die Federbeaufschlagung der Baueinheit und resultierendem Drehmoment im Auslösesinn,
- Fig. 4: eine ähnliche Darstellung wie Fig. 3 mit einem zusätzlich eingezeichneten Zwischenhebel und dessen Nase zum Angreifen des Verriegelungsglieds beim Reversieren,
- Fig. 5: eine ähnliche Ansicht wie Fig. 2 eines zweiten Ausführungsbeispiels mit einem Verriegelungsglied, das die gleichzeitige Entriegelung zweier Halterungen ermöglicht,
- Fig. 6: eine ähnliche Ansicht wie Fig. 5 eines weiteren Ausführungsbeispiels mit zwei Verriegelungsgliedern, die an nur einem Zwischenhebel abgestützt sind,
- Fig. 7: eine ähnlich Ansicht wie Fig. 6 eines weiteren Ausführungsbeispiels mit zwei Verriegelungsgliedern, die jeweils an einem Zwischenhebel abgestützt sind,
- Fig. 8: eine ähnlich Ansicht wie Fig. 7 eines nicht erfindungsgemässen Ausführungsbeispiels mit zwei Verriegelungsgliedern,
- Fig. 9: eine ähnlich Ansicht wie Fig. 8 eines weiteren nicht erfindungsgemässen Ausführungsbeispiels, das eine Kombination von mehreren der vorher dargestellten Lösungen bildet,
- Fig. 10: eine Detaildarstellung eines von Federkraft im Haltesinn beaufschlagten Betätigungshebels,
- Fig. 11: eine Darstellung des Gesamthebelsystems mit der Feder nach Fig. 10, die sich am Verriegelungshebel abstützt und diesen im Auslösesinn beaufschlagt,
- Fig. 12: eine ähnliche Ansicht wie Fig. 11 mit einem Verriegelungshebel, der durch den Halteteil der Baueinheit kein im Auslösesinn wirksames Drehmoment erfährt,
- Fig. 13: eine schematische Gesamtansicht einer Vorrichtung mit zwei Verriegelungsgliedern,
- Fig. 14: eine schematische Gesamtansicht der Vorrichtung gemäß dem ersten Ausführungsbeispiel bei Einbettung in ein komplett montierbares Modul.

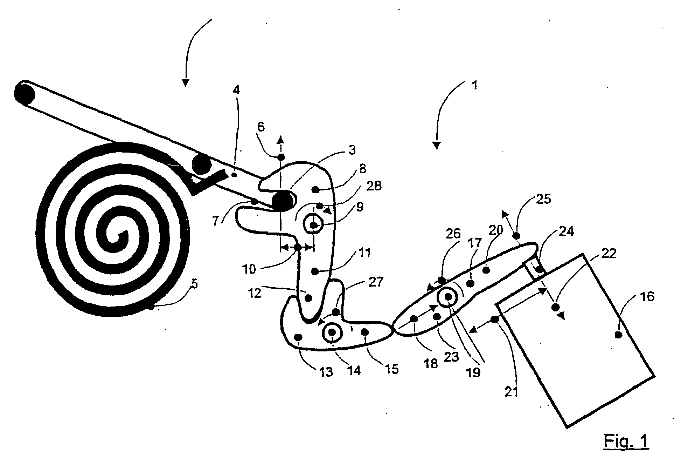

Die in Fig. 1 dargestellte Vorrichtung 1 zeigt einen Teilbereich 2 einer bei Auslösung schnell beweglichen Baueinheit, etwa einer im Crashfall aufwärts verlagerbaren Motorhaube, eines translatorisch oder rotatorisch ausfahrbaren Überrollbügels, einer aktiven Kopfstütze, einer Sitz- oder Kopfstützenverstellung, einer aktiven Stoßstange oder eines ähnlichen Bauteils oder Baueinheit. Von dieser ist hier nur ein mit einem Halteteil 3, etwa einem Zapfen, Achsstummel oder dergleichen, versehener Hebel 4 dargestellt. Der Hebel 4 ist durch zumindest eine starke Feder 5, hier eine Spiralfeder, oder einen anderen Antrieb im Auslösesinn vorgespannt, so dass auf den Halteteil 3 eine große Kraft 6 in auslösende Richtung wirkt.

Der Halteteil 3 ist in der gezeigten Haltestellung in einem Maul 7 eines Verriegelungsglieds, das hier als um eine Achse 9 schwenkbarer Verriegelungshebel 8 ausgebildet ist, aufgenommen. Da die Haiteteilaufnahme 7 nahe an der Drehachse 9 liegt (Hebelarm 10), ist trotz der großen angreifenden Kraft 6 das auf den Verriegelungshebel 8 einwirkende Drehmoment relativ gering. Die hohe Kraft 6 der Feder 5 ist erforderlich, um eine schnelle Bewegung der Baueinheit, etwa eines Überrollbügels, im Crashfall zu gewährleisten.

Im hier gezeigten Ausführungsbeispiel ist an seinem lang erstreckten freien, dem Aufnahmemaul 7 bezüglich der Drehachse 9 gegenüberliegenden Ende 11 der Verriegelungshebel 8 in einem Aufnahmemaul 12 eines als Sperrklinke dienenden Zwischenhebels 13 aufgenommen, um in Haltestellung ein Drehen des Verriegelungshebels 8 um die Achse 9 zu verhindern. Der Zwischenhebel 13 muss nicht zwangsläufig vorhanden sein und ist hier seinerseits als weiterer Schwenkhebel ausgebildet, der um die Achse 14 schwenkbar ist.

Um in Haltestellung seine Lage zu sichern, stützt er sich mit seinem dem Aufnahmemaul 12 gegenüberliegenden, lang erstreckten freien Ende 15 an einem von einem Aktor 16 beeinflußbaren Betätigungshebel 17 ab.

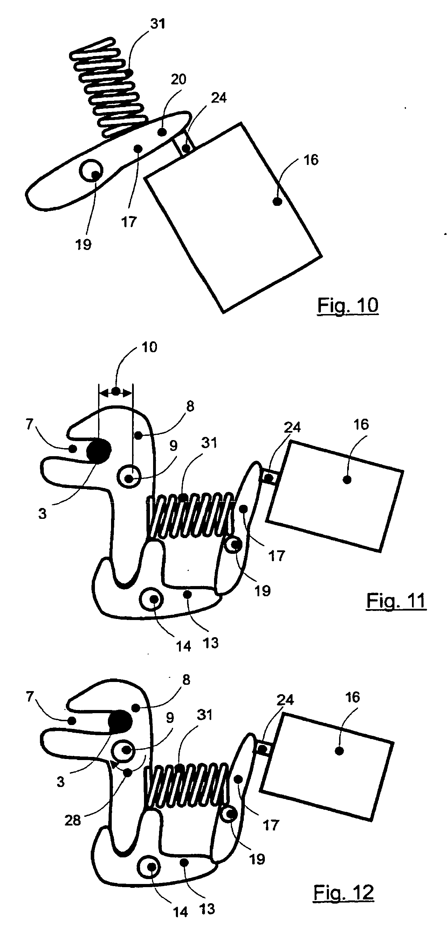

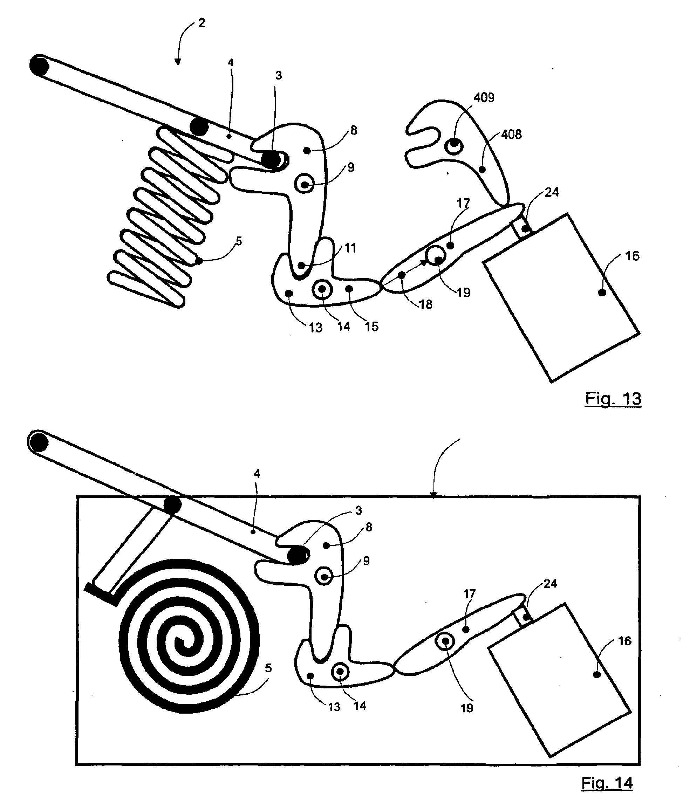

Die Abstützung erfolgt derart, dass die von dem Zwischenhebel 13 in den Betätigungshebel 17 eingeleitete Kraft 18 in Richtung der Drehachse 19 des Betätigungshebels 17 weist und daher kein resultierendes Drehmoment auf diesen ausübt. Die Kraft 18 des Zwischenhebels 13 resultiert aus dem von der Feder 5 ausgeübten Drehmoment auf den Verriegelungshebel 8, das von diesem als weiteres Drehmoment auf den Zwischenhebel 13 übertragen wird. Die Richtung der daraus resultierenden Kraft 18 liegt dabei in einer Ebene mit der Drehachse 19 des Betätigungshebels 17. Das dem Kraftangriffspunkt bezüglich der Achse 19 gegenüber gelegene freie Ende 20 des Betätigungshebels 17 bildet einen Hebelarm 21 aus, über den der Aktor 16 in Haltestellung das Verschwenken des Betätigungshebels 17 verhindert und zur Auslösung auf diesen einwirkt. Der Aktor 16 arbeitet gegen das Reibmoment, das sich aus der Kraft 18 und dem Hebelarm zwischen dem Kraftangriffspunkt der Kraft 18 und der Drehachse 19 des Betätigungshebels 17 ergibt, gegen das Reibmoment in der Drehachse 19 und ggf. gegen die Rückstellkraft einer Feder 31 (siehe z.B. Fig. 10). Die Feder 31 kann dabei die üblicherweise in einem Aktor 16 angeordnete (nicht gezeigt) Rückstellfeder ersetzen.

Insgesamt bilden der Verriegelungshebel 8, der Zwischenhebel 13 und der Betätigungshebel 17 in Haltestellung, in der sie zumindest kraftschlüssig miteinander in Verbindung stehen, ein Getriebe aus, das eine große im Auslösesinn wirkende Kraft 6 der Feder 5 auf die Baueinheit am Verriegelungshebel 8 in eine kleine Kraft an der zu haltenden Seite des Betätigungshebels 17 untersetzt. Dieses resultiert aus den unterschiedlichen Hebelarmlängen des Verriegelungshebels 8 bezüglich seiner Drehachse 9, der entsprechenden Gestaltung des Zwischenhebels 13 und dem Hebelarm 21 des Betätigungshebels 17 an seiner dem oder den Aktor(en) 16 zugewandten Seite 20.

Im Falle einer Auslösung, beispielsweise bei einem Crash oder bei einem sich anbahnenden Crash, wird oder werden der oder die Aktor(en) 16 von entsprechenden Sensoren angesteuert, so dass sich jeweils beispielsweise der Stößel 24 des Magnetankers in Richtung des Pfeils 25 bewegt, um somit ein Drehmoment auf das Ende 20 des Betätigungshebels 17 auszuüben. Dieses Drehmoment kann gegen die Feder 31 (Fig. 10,11) einwirken, die den Betätigungshebel 17 entgegen der Auslöserichtung des Pfeils 25 vorspannt und somit die Haltestellung gegen ein ungewolltes Auslösen stabilisiert.

Durch das bei Auslösung ausgeübte Drehmoment auf den Betätigungshebel 17 schwenkt dieser in Richtung des Pfeils 26 um seine Achse 19 und gibt den als Sperrklinke wirkenden Zwischenhebel 13 frei. Dieser kann, getrieben von dem durch die Baueinheit im Auslösesinn vorgespannten Verriegelungshebel 8 und ggf. einer weiteren, nicht eingezeichneten Feder, in Richtung des Pfeils 27 verschwenken, so dass das freie Ende 11 des Verriegelungshebels 8 aus dem Maul 12 des Zwischenhebels 13 herausgleiten und in Richtung des Pfeils 28 aufschwenken kann. Der Verriegelungshebel 8 kann dabei ebenfalls durch eine weitere Feder - in den Figuren 11 und 12 eingezeichnet und dort mit dem Bezugszeichen 31 versehen - im Auslösesinn vorgespannt sein. Der Halteteil 3 gleitet beim Verschwenken des Verriegelungshebels 8 aus dessen Aufnahmemaul 7 und kann explosionsähnlich ausfahren.

Anstelle der reinen Unterstützung des Aufschwenkens des Verriegelungshebels 8 durch eine im Auslösesinn wirksame Feder 31 kann auch die Feder 31 allein das Auslösen bewirken, wodurch es möglich wird, wie in Fig. 12 dargestellt ist, dass das Maul 7 des Verriegelungshebels 8 bis nahezu oder direkt oberhalb der Drehachse 9 verläuft und der Halteteil 3 der Baueinheit ohne einen Hebelarm 10 oberhalb der Drehachse 9 gehalten wird. Dann wird durch diese kein resultierendes Drehmoment auf den Verriegelungshebel 8 ausgeübt. Damit kann die auslösbare Haltekraft sehr groß sein, ohne dass die Kraft des magnetischen Aktors 16 ansteigen muss, was die Vibrationsfestigkeit und Sicherheit gegen ungewollte Auslösung weiter begünstigt.

Durch die Auslösung wird zunächst der Betätigungshebel 17, danach der Zwischenhebel 13 und zuletzt der Verriegelungshebel 8 mechanisch freigegeben - eventuell durch die Feder 31 zusätzlich beaufschlagt - und die Baueinheit in kürzester Zeit von typisch weniger als 5 ms über die mit beispielsweise 500 N vorgespannte Feder 5 ausgefahren.

Ein Reversieren der Baueinheit ist von Hand durch Niederdrücken des Hebels 4 gegen die Federkraft 5 möglich, bis der Halteteil 3 an dem Aufnahmemaul des Verriegelungshebels 8 einrastet. Beim Herunterbewegen drückt der Halteteil 3 auf die dann schräg nach oben weisende Fläche 29 des Aufnahmemauls 7 des Verriegelungshebels 8, so dass dieses die ihm optional zugeordnete Feder spannt und aufgrund des seitlichen Versatzes des Angriffspunktes 29 des Halteteils 3 zur Drehachse 9 entgegen der Richtung 28 in die Senkrechte schwenkt. Dabei drückt der Verriegelungshebel 8 gegen eine Nase 30 des Zwischenhebels 13, so dass auch dieser wieder in seine Haltestellung geschwenkt wird. Ist diese erreicht, wird der Betätigungshebel 17 freigegeben, so dass er entgegen der Richtung 26 wieder in seine Haltestellung verschwenkt und den Zwischenhebel 13 verriegelt. Nun kann der Hebel 4 losgelassen werden, da er von dem Verriegelungshebel 8 in seiner verriegelten Position gehalten wird.

In weiteren Ausführungsbeispielen sind bei prinzipieller Ähnlichkeit einige Variationen dargestellt:

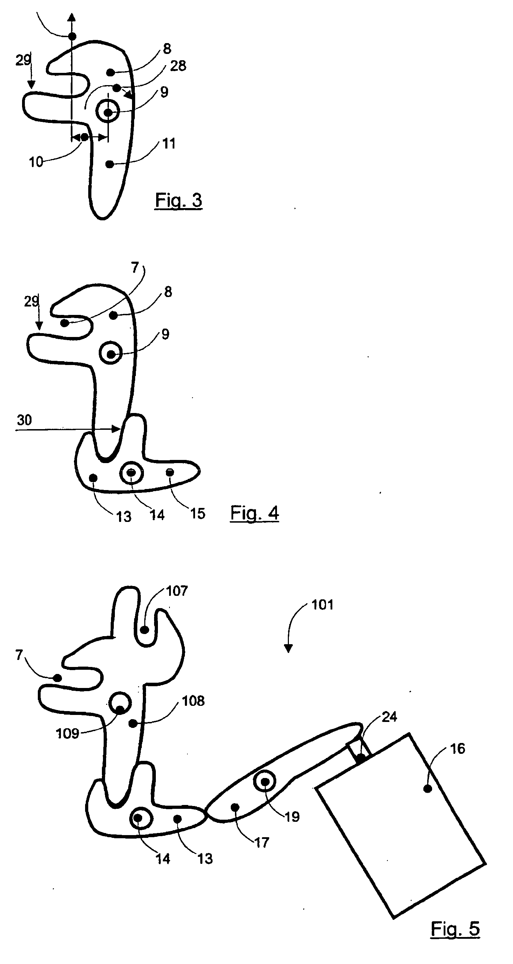

Fig. 5 zeigt eine Version der Hebel einer Vorrichtung 101, bei welcher der Verriegelungshebel 108 zwei Aufnahmemäuler 7, 107 aufweist und somit bei auslösendem Verschwenken um seine Achse 109 zwei Baueinheiten zeitgleich oder zeitlich versetzt, je nach Geometrie der Mäuler 7, 107, freigeben kann. Zwischenhebel 13 und Betätigungshebel 17 sind in gleicher Weise wie im ersten Ausführungsbeispiel ausgebildet.

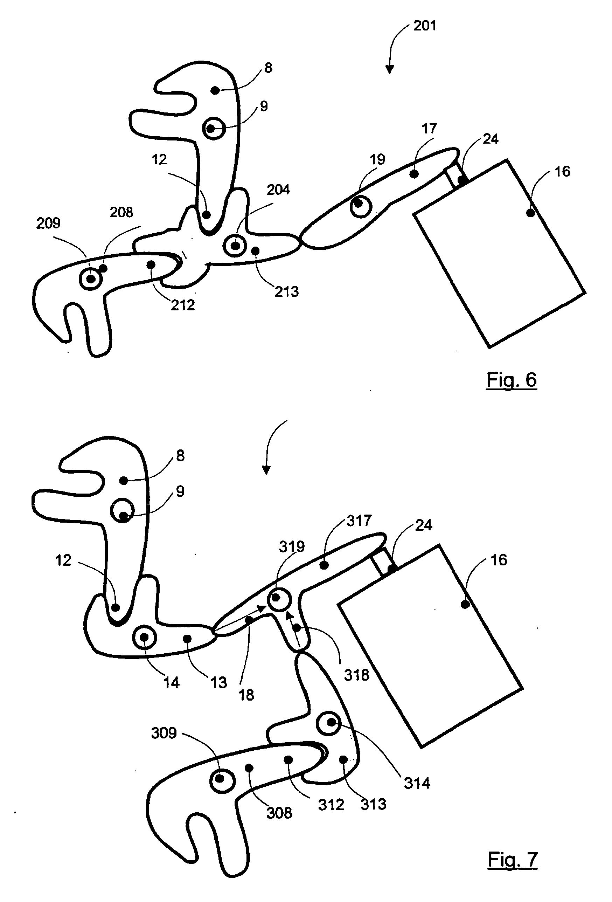

Gemäß Fig. 6 umfasst die dort gezeigte Vorrichtung 201 zwei separate Verriegelungshebel 8, 208, die an zwei Mäulern 12, 212 eines Zwischenhebels 213 abgestützt sind und bei dessen Verschwenken um seine Achse 214 zeitgleich oder zeitlich versetzt auslösen und somit um ihre jeweiligen Achsen 9, 209 verschwenken, wobei auch hier die Geometrie der Mäuler 12, 212 den jeweiligen Zeitpunkt der Auslösung bestimmen. Der Betätigungshebel 17 ist in gleicher Weise wie im ersten Ausführungsbeispiel ausgebildet

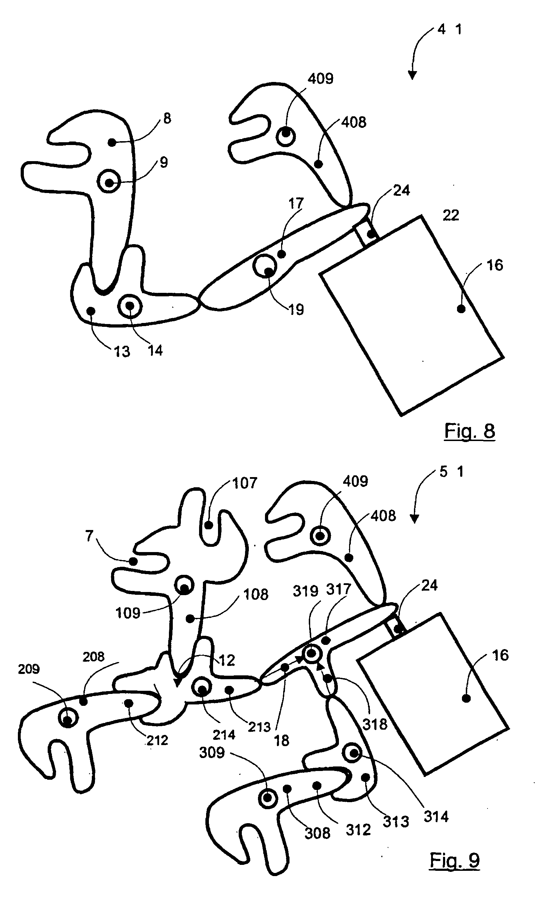

Bei der Vorrichtung 301 nach Fig. 7 sind wie im Ausführungsbeispiel nach Fig. 6 wiederum zwei Verriegelungshebel 8, 308 vorgesehen, die jedoch hier von zwei getrennten Zwischenhebeln 13, 313 abgestützt sind. Diese sind um ihre jeweiligen Achsen 14, 314 schwenkbar urid stützen sich zur Wahrung der Haltestellung an einem Betätigungshebel 317 derart ab, dass sich die eingeleiteten Kräfte 18, 318 jeweils auf das Zentrum der Drehachse 319 des Betätigungshebels 317 weisen, so dass auch hier ein resultierendes Drehmoment auf den Betätigungshebel 317 vermieden ist. Alternativ wäre auch eine sich gegenseitig aufhebende Drehmomenteinleitung durch die Zwischenhebel 13, 313 in den Betätigungshebel 317 möglich.

In Fig. 8 ist eine nicht erfindungsgemässe Vorrichtung 401 gezeigt, die neben den im ersten Ausführungsbeispiel gezeigten Hebeln 8, 13, 17 einen weiteren Verriegelungshebel 408 zeigt, der um die Achse 409 schwenkbar ist, sich unmittelbar auf dem Ende 20 des Betätigungshebels 17 abstützt und bei dessen Verschwenken somit mit verschwenken kann. Die Verriegelungshebel 8, 408 können damit auch hier zeitgleich oder zeitversetzt auslösen und mehrere Baueinheiten freigeben. Die Gesamtvorrichtung 401 ist in Fig. 13 schematisch dargestellt, wobei dort eine Baueinheit mit einer Schraubenfeder 5, die in Auslöserichtung vorgespannt ist, eingezeichnet ist.

Fig. 9 zeigt eine nicht erfindungsgemässe Kombination 501 der in den Figuren 5 bis 8 gezeigten Beispiele: Hier sind sowohl der mit zwei Aufnahmebereichen 7, 107 versehene Verriegelungshebel 108 gemäß der Vorrichtung 101 als auch der zweite Verriegelungshebel 208 und der mit zwei Aufnahmemäulern 12, 212 gemäß der Vorrichtung 201 ausgebildete Zwischenhebel 213 vorhanden, ebenso wie der weitere Verriegelungshebel 308, der sich an dem Zwischenhebel 313 abstützt, wobei beide sperrenden Zwischenhebel 213, 313 sich gemeinsam wie in der Vorrichtung 301 an dem Betätigungshebel 317 abstützen, von dem zusätzlich wie bei der Vorrichtung 401 der weitere Verriegelungshebel 408 unmittelbar gesichert ist. Insgesamt können mit einer solchen Vorrichtung 501 fünf Baueinheiten gleichzeitig gehalten und im Bedarfsfall ausgelöst werden.

Weitere Kombinationen sind möglich. Auch müssen nicht alle Hebel Schwenkhebel sein, sondern auch ausschließlich oder zusätzlich translatorisch verlagerbare Hebel können Verwendung finden. Auch kann der Aktor 16 anstelle am zweiten Ende 20 des Betätigungshebels 17 am ersten Ende 23 des Betätigungshebels 17 angreifen, und je nach gewählter Positionierung zum Betätigungshebel 17 diesen durch eine Zug- oder Schubbewegung auslösen.

In Fig. 14 ist die Einbettung der Vorrichtung 1 in ein Modul 32 dargestellt, das als geschlossener Kasten, etwa aus Stahlblech, ausgebildet sein kann.

Damit kann die auszulösende Baueinheit, z. B. ein Aufstellmechanismus für eine Haube, ohne Federvorspannung montiert werden. Erst durch anschließende Montage des die Vorrichtung 1 enthaltenden Moduls 32 wird der federgespannte Hebel 4 mit der Baueinheit verbunden. Es besteht aber auch die Möglichkeit, den Hebel 4 mit dem Halteteil 3 der auszulösenden Baueinheit zuzuordnen und das Halteteil 3 bei der Montage des ggf. vorgespannten Moduls in dieses einzufahren. Damit kann z. B. die aufzustellende Baueinheit für eine Motorhaube mit der Karosserie lackiert werden; die Vorrichtung 1 in dem Modul 32 wird dann nach der Lackierung montiert.

Dieses Modul kann im gespannten Zustand der Feder 5 in die Fahrzeugkarosserie eingesetzt werden, so daß bei der Montage nicht erst die Feder 5 gespannt werden muß und somit die dabei gegebene Gefahr eines Abrutschens vermieden ist. Die Montagesicherheit ist dadurch erhöht, die Montagekosten sind gesenkt. Zudem ist die exakte Ausrichtung der Hebel 8, 13, 17 einerseits und ggf. die des Hebels 4 der Baueinheit andererseits gewährleistet, was nicht nur die Montage, sondem auch die Betriebssicherheit verbessert. Die Feder 5 kann sich dabei im Modulgehäuse 32 abstützen. Beim Reversieren der Baueinheit nach einer Auslösung wird gleichzeitig die Feder 5 gespannt sowie der Verriegelungshebel 8 zurückgestellt, der dann die Sperrklinke 13 zurücksetzt.

Eine derartige modulare Ausbildung ist auch für weitere Vorrichtungen, z. B. gemäß den beschriebenen weiteren Ausführungsbeispielen 101, 201, 301, 401, 501, möglich.

### Bezugszeichenliste

- 1,101,201,301,401,501: Vorrichtung,
- 2: Teilbereich der auszulösenden Baueinheit,
- 3: Halteteil,
- 4: Hebel,
- 5: Feder,
- 6: Kraftrichtung,
- 7,107: Maul des Verriegelungshebels,
- 8,108,208,308,408: Verriegelungshebel,
- 9,109,209,309,409: Achse des Verriegelungshebels,
- 10: Hebelarm,
- 11: freies Ende des Verriegelungshebels,
- 12,212,312: Maul des Zwischenhebels,
- 13,213,313: Zwischenhebel,
- 14,214,314: Achse des Zwischenhebels,
- 15: freies Ende des Zwischenhebels,
- 16: Aktor,
- 17,317: Betätigungshebel,
- 18,318: Kraft,
- 19,319: Achse des Betätigungshebels,
- 20: zweites Ende des Betätigungshebels,
- 21: Hebelarm,
- 22: Kraft,
- 23: erstes Ende des Betätigungshebels,
- 24: Stößel,
- 25: Auslöserichtung des Stößels,
- 26: Schwenkrichtung des Betätigungshebels bei Auslösung,
- 27: Schwenkrichtung des Zwischenhebels bei Auslösung,
- 28: Schwenkrichtung des Verriegelungshebels bei Auslösung,
- 29: Fläche des Verriegelungshebels,
- 30: Nase des Zwischenhebels,
- 31: Feder,
- 32: Modul.

## Patentansprüche

1. Vorrichtung (1;101;201;301;401;501) zur Auslösung von schnell beweglichen Baueinheiten, insbesondere von Sicherheitsbauteilen, wobei die Vorrichtung (1;101;201;301;401;501) zumindest einen als Verriegelungsglied ausgebildeten Verriegelungshebel (8;108;208;308;408;) umfasst, welcher die Bewegung der Baueinheit In Haltestellung blockiert, und wobei die Vorrichtung (1;101;201;301;401;501) zumindest einen Betätigungshebel (17;317) umfasst, der in Haltestellung eine Bewegung des Verriegelungshebels (8;108;208;308;408) mittelbar blockiert und durch Kraftbeaufschlagung zum Lösen der Haltestellung beweglich ist und
der Betätigungshebel (17;317) ein Schwenkhebel ist, der in Haltestellung frei von einer resultierenden Drehmomentbeaufschlagung gehalten ist, **dadurch gekennzeichnet, dass** durch der Betätigungshubel (17,317) weitere zwischen dem zumindest einen Verriegelungshebel (8;108;208;308;408) und dem Betätigungshebel (17;317) liegende Hebel- (13;213;313) gehalten ist.

2. Vorrichtung nach Anspruch 1,
**dadurch gekennzeichnet,**
**dass** der Verriegelungshebel (8;108;208;308;408) in Haltestellung von der auszulösenden Baueinheit im Bewegungssinn der schnell bewegten Auslösung kraftbeaufschlagt ist und sich zur Blockierung dieser Bewegung mittelbar an dem Betätigungshebel (17;317) derart abstützt, dass auf diesen eine in der Ebene seiner Drehachse (19;319) orientierte Kraft (18;318) einwirkt.

3. Vorrichtung nach einem der Ansprüche 1 oder 2,
**dadurch gekennzeichnet,**
**dass** der Verriegelungshebel (8;108;208;308;408) und der oder die weiteren Hebel (13;213;313;17;317) in Haltestellung ein Getriebe bilden, das eine große im Auslösesinn wirkende Kraft (6) der Baueinheit am Verriegelungsglied (8;108;208;308;408) in eine kleine Kraft an der zu haltenden Seite des Betätigungshebels (17;317) untersetzt.

4. Vorrichtung nach einem der Ansprüche 1 bis 3,
**dadurch gekennzeichnet,**
**dass** der Verriegelungshebel (8;108;208;308;408) von einem Schwenkhebel gebildet ist, der sich in Haltestellung über einen schwenkbaren Zwischenhebel (13;213) an dem Betätigungshebel (17;317) abstützt.

5. Vorrichtung nach Anspruch 4,
**dadurch gekennzeichnet,**
**dass** der Verriegelungshebel (8;108;208;308;408) zumindest ein nahe seiner Schwenkachse (9;109;209;309;409) gelegenes Aufnahmemaul (7;107) für einen Achsstummel, Zapfen oder sonstiges Halteteil (3) der auszulösenden Baueinheit und entfernter zu seiner Schwenkachse (9;109;209;309;409) ein sich lang erstreckendes freies Ende (11) aufweist.

6. Vorrichtung nach einem der Ansprüche 4 oder 5,
**dadurch gekennzeichnet,**
**dass** der Zwischenhebel (13;213;313) ein nahe seiner Schwenkachse (14;214;314) gelegenes Aufnahmemaul (12;212;312) für das freie Ende (11) des Verriegelungshebels (8;108;208;308) und entfernter zu seiner Schwenkachse (14;214;314;) ein lang erstrecktes freies Ende (15) aufweist.

7. Vorrichtung nach einem der Ansprüche 1 bis 6,
**dadurch gekennzeichnet,**
**dass** der Betätigungshebel (17;317) zumindest als einarmiger Hebel, vorzugsweise als Hebel mit einem ersten (23) und einem zweiten (20) Ende ausgebildet ist, wobei das erste Ende (23) zur Abstützung des freien Endes des Zwischenhebels (13) und eines Aktors (16) dient der bei Verwendung eines doppelarmigen Hebels jenseits seiner Schwenkachse (19;319) am zweiten Ende (20) abstützbar ist.

8. Vorrichtung nach einem der Ansprüche 1 bis 7,
**dadurch gekennzeichnet,**
**dass** diese durch elektromagnetische Beaufschlagung des Aktors (16) aus der Halte- in eine Auslösestellung überführbar ist, in der die Hebel (8;108;208;308;408;13;213;313;17;317) ihren Kontakt zueinander verlieren und der Verriegelungshebel (8;108;208;308;408) die schnell bewegliche Baueinheit freigibt.

9. Vorrichtung nach einem der Ansprüche 1 bis 8,
**dadurch gekennzeichnet,**
**dass** diese durch mechanische Beaufschlagung aus der Auslöse- in die Haltestellung rückführbar ist.

10. Vorrichtung nach einem der Ansprüche 1 bis 9,
**dadurch gekennzeichnet,**
**dass** zumindest der Verriegelungshebel (8;108;208;308;408) im Auslösesinn vorgespannt ist.

11. Vorrichtung nach Anspruch 10,
**dadurch gekennzeichnet,**
**dass** eine der Vorspannung dienende Feder (31) alleinig die Auslösekraft für den Verriegelungshebel (8;108;208;308;408) aufbringt.

12. Vorrichtung nach einem der Ansprüche 1 bis 11,
**dadurch gekennzeichnet,**
**dass** der Betätigungshebel (17;317) im Haltesinn vorgespannt ist.

13. Vorrichtung nach Anspruch 12,
**dadurch gekennzeichnet,**
**dass** die der Vorspannung dienende Feder (31) die in dem den Betätigungshebel (17;317) antreibenden Aktor (16) üblicherweise vorgesehene Rückstellfeder ersetzt.

14. Vorrichtung nach mindestens einem der Ansprüche 1 bis 13,
**dadurch gekennzeichnet,**
**dass** diese zur Auslösung eines Karosseriehaubenteils, eines Überrollbügels, einer Kopfstütze, einer Stoßstange, eines Gurtstraffers oder einer Sitzverstellung eines Kraftfahrzeugs im Crashfall dient.

15. Vorrichtung nach mindestens einem der Ansprüche 1 bis 14,
**dadurch gekennzeichnet,**
**dass** diese zusammen mit zumindest einer Feder (5) in einem Modul (32) gehalten ist, und dass das Modul (32) mit der schnell beweglichen Baueinheit verbunden ist.

16. Vorrichtung nach Anspruch 15,
**dadurch gekennzeichnet,**
**dass** die Feder (5) vorspannbar ist.

17. Vorrichtung nach Anspruch 15 oder 16,
**dadurch gekennzeichnet,**
**dass** der Hebel (4) der auszulösenden Baueinheit von dem Modul (32) umfasst ist.

## Claims

1. A device (1; 101; 201; 301; 401; 501) for triggering quick-action units, particularly safety components, wherein the device (1; 101; 201; 301; 401; 501) comprises at least one locking element in the form of a locking lever (8; 108; 208; 308; 408) that blocks the movement of the unit in the holding position, wherein the device (1; 101; 201; 301; 401; 501) comprises at least one actuating lever (17; 317) that indirectly blocks the movement of the locking lever (8; 108; 208; 308; 408) in the holding position and can be displaced in order to release the holding position by exerting a force thereupon, and wherein the actuating lever (17; 317) is realized in the form of a pivoted lever that is held such that it is not acted upon by a resultant torque in the holding position,
**characterized in**
**that** the actuating lever (17; 317) is held by additional levers (13; 213; 313) that lie between the at least one locking lever (8; 108; 208; 308; 408) and the actuating lever (17; 317).

2. The device according to Claim 1,
**characterized in**
**that** the locking lever (8; 108; 208; 308; 408) is prestressed in the moving direction of the rapid-action unit to be triggered in the holding position thereof and blocked from carrying out this movement by being indirectly supported on the actuating lever (17; 317) in such a way that a force (18; 318) acts thereupon that is oriented in the plane of its rotational axis (19; 319).

3. The device according to Claim 1 or 2,
**characterized in**
**that** the locking lever (8; 108; 208; 308; 408) and the additional lever(s) (13; 213; 313; 17; 317;) form a gear in the holding position that reduces a high force (6) of the unit at the locking lever (8; 108; 208; 308; 408) that acts in the triggering direction into a low force on the side of the actuating lever (17; 317) to be held.

4. The device according to one of Claims 1 to 3,
**characterized in**
**that** the locking lever (8; 108; 208; 308; 408) is realized in the form of a pivoted lever that is supported on the actuating lever (17; 317) by means of a pivoted intermediate lever (13; 213) in the holding position.

5. The device according to Claim 4, **characterized in**
**that** the locking lever (8; 108; 208; 308; 408) features at least one receptacle hole (7; 107) for a bearing journal, a pin or another holding element (3) of the unit to be triggered proximal to its pivoting axis (9; 109; 209; 309; 409) and a long stretched-out free end (11) distal to its pivoting axis (9; 109; 209; 309; 409).

6. The device according to Claim 4 or 5,
**characterized in**
**that** the intermediate lever (13; 213; 313) features a receptacle hole (12; 212; 312) for the free end (11) of the locking lever (8; 108; 208; 308) proximal to its pivoting axis (14; 214; 314) and a long stretched-out free end (15) distal to its pivoting axis (14; 214; 314).

7. The device according to one of Claims 1 to 6,
**characterized in**
**that** the actuating lever (17; 317) is at least realized in the form of a one-armed lever, preferably in the form of a lever with a first (23) and a second end (20), wherein the first end (23) serves for supporting the free end of the intermediate lever (13) and an actuator (16) that, when using a double-armed lever, is supported on the second end (20) beyond its pivoting axis (19; 319).

8. The device according to one of Claims 1 to 7,
**characterized in**
**that** said device can be transferred from the holding position into a release position by acting upon the actuator (16) electromechanically, wherein the levers (8; 108; 208; 308; 408; 13; 213; 313; 17; 317) lose contact with one another in the release position and the locking lever (8; 108; 208; 308; 408) releases the rapid-action unit.

9. The device according to one of Claims 1 to 8,
**characterized in**
**that** said device can be acted upon mechanically in order to be returned from the release position into the holding position.

10. The device according to one of Claims 1 to 9,
**characterized in**
**that** at least the locking lever (8; 108; 208; 308; 408) is prestressed in the triggering direction.

11. The device according to Claim 10,
**characterized in**
**that** the force for releasing the locking lever (8; 108; 208; 308; 408) is generated exclusively by a spring (31) provided for prestressing purposes.

12. The device according to one of Claims 1 to 11,
**characterized in**
**that** the actuating lever (17; 317) is prestressed in the holding direction.

13. The device according to Claim 12,
**characterized in**
**that** the spring (31) provided for prestressing purposes replaces the pull-back spring usually provided in the actuator (16) that drives the actuating lever (17; 317).

14. The device according to at least one of Claims 1 to 13,
**characterized in**
**that** said device serves for triggering a car body hood section, a roll bar, a headrest, a bumper, a belt tightener or a seat adjusting mechanism of a motor vehicle in case of a crash.

15. The device according to at least one of Claims 1 to 14,
**characterized in**
**that** said device is held in a module (32) together with at least one spring (5), and in that the module (32) is connected to the rapid-action unit.

16. The device according to Claim 15,
**characterized in**
**that** the spring (5) can be prestressed.

17. The device according to Claim 15 or 16,
**characterized in**
**that** the lever (4) of the unit to be triggered is encompassed by the module (32).

## Revendications

1. Dispositif (1 ; 101 ; 201 ; 301 ; 401 ; 501) pour le déclenchement d'unités modulaires à déplacement rapide, notamment d'éléments de sécurité, le dispositif (1 ; 101 ; 201 ; 301 ; 401 ; 501) comprenant au moins un levier de verrouillage (8 ; 108 ; 208 ; 308 ; 408) conçu en tant qu'organe de verrouillage, bloquant le déplacement de l'unité modulaire en position d'arrêt et le dispositif (1 ; 101 ; 201 ; 301 ; 401 ; 501) comprenant au moins un levier de manoeuvre (17 ; 317), qui en position d'arrêt bloque indirectement un déplacement du levier de verrouillage (8 ; 108 ; 208 ; 308 ; 408) et qui par application de force est mobile pour desserrer la position d'arrêt et le levier de manoeuvre (17 ; 317) étant un levier pivotant, qui en position d'arrêt reste libre d'une application d'un couple de rotation résultant, **caractérisé en ce que** le levier de manoeuvre (17 ; 317) est maintenu par des leviers supplémentaires (13 ; 213 ; 313) maintenus entre le au moins un levier de verrouillage (8 ; 108 ; 208 ; 308 ; 408) et le levier de manoeuvre (17 ; 317).

2. Dispositif selon la revendication 1, **caractérisé en ce qu'**en position d'arrêt, le levier de verrouillage (8 ; 108 ; 208 ; 308 ; 408) est soumis à une force par l'unité modulaire à déclencher dans le sens de déplacement du déclenchement à déplacement rapide et que pour le blocage de ce déplacement, il s'appuie indirectement sur le levier de manoeuvre (17 ; 317) de façon à ce qu'une force (18 ; 318) orientée dans le plan de son axe de rotation (19 ; 319) agisse sur ce dernier.

3. Dispositif selon l'une quelconque des revendications 1 ou 2, **caractérisé en ce qu'**en position d'arrêt, le levier de verrouillage (8 ; 108 ; 208 ; 308 ; 408) et le ou les levier (s) supplémentaire (s) (13 ; 213 ; 313 ; 17 ; 317) forment une transmission, qui démultiplie une grande force (6) de l'unité modulaire agissant dans le sens de déclenchement sur l'élément de verrouillage (8 ; 108 ; 208 ; 308 ; 408) en une petite force sur le côté à arrêter du levier de manoeuvre (17 ; 317).

4. Dispositif selon l'une quelconque des revendications 1 à 3, **caractérisé en ce que** le levier de verrouillage (8 ; 108 ; 208 ; 308 ; 408) est formé par un levier pivotant, qui en position d'arrêt s'appuie sur le levier de manoeuvre (17 ; 317) par l'intermédiaire d'un levier intermédiaire pivotant (13 ; 213).

5. Dispositif selon la revendication 4, **caractérisé en ce que** le levier de verrouillage (8 ; 108 ; 208 ; 308 ; 408) comporte au moins une mâchoire de logement (7 ; 107) située à proximité de son axe de pivotement (9 ; 109 ; 209 ; 309 ; 409) pour une fusée d'essieu, un tourillon ou une autre élément de retenue (3) de l'unité modulaire à déclencher et **en ce que** plus loin de son axe de pivotement (9 ; 109 ; 209 ; 309 ; 409), il comporte une extrémité libre (11) s'étendant en longueur.

6. Dispositif selon l'une quelconque des revendications 4 ou 5, **caractérisé en ce que** le levier intermédiaire (13 ; 213 ; 313) comporte une mâchoire de logement (12 ; 212 ; 312) située à proximité de son axe de pivotement (14 ; 214 ; 314) pour l'extrémité libre (11) du levier de verrouillage (8 ; 108 ; 208 ; 308) et **en ce que** plus loin de son axe de pivotement (14 ; 214 ; 314), il comporte une extrémité libre (15) s'étendant en longueur.

7. Dispositif selon l'une quelconque des revendications 1 à 6, **caractérisé en ce que** le levier de manoeuvre (17 ; 317) est conçu au moins en tant que levier à un bras, de préférence en tant que levier avec une première (23) et une deuxième (20) extrémité, la première extrémité (23) étant destinée à soutenir l'extrémité libre du levier intermédiaire (13) et d'un actionneur (16) qui lors de l'utilisation d'un levier à double bras peut s'appuyer de l'autre côté de son axe de pivotement (19 ; 319) sur la deuxième extrémité (20).

8. Dispositif selon l'une quelconque des revendications 1 à 7, **caractérisé en ce que** sous application électromagnétique de l'actionneur (16), ce dernier peut transiter de la position d'arrêt dans une position de déclenchement, dans laquelle les leviers (8 ; 18 ; 208 ; 308 ; 408 ; 13 ; 213 ; 313 ; 17 ; 317) perdent leur contact mutuel et le levier de verrouillage (8 ; 108 ; 208 ; 308 ; 408) libère l'unité modulaire à déplacement rapide.

9. Dispositif selon l'une quelconque des revendications 1 à 8, **caractérisé en ce que** ce dernier peut être ramené de la position de déclenchement dans la position d'arrêt, par application mécanique.

10. Dispositif selon l'une quelconque des revendications 1 à 9, **caractérisé en ce que** au moins le levier de verrouillage (8 ; 108 ; 208 ; 308 ; 408) est précontraint dans le sens de déclenchement.

11. Dispositif selon la revendication 10, **caractérisé en ce qu'**un ressort (31) servant à la précontrainte applique à lui seul la force de déclenchement pour le levier de verrouillage (8 ; 108 ; 208 ; 308 ; 408).

12. Dispositif selon l'une quelconque des revendications 1 à 11, **caractérisé en ce que** le levier de manoeuvre (17 ; 317) est précontraint dans le sens d'arrêt.

13. Dispositif selon la revendication 12, **caractérisé en ce que** le ressort (31) destiné à la précontrainte remplace le ressort de rappel, habituellement prévu dans l'actionneur (16) entraînant le levier de manoeuvre (17 ; 317).

14. Dispositif selon au moins l'une quelconque des revendications 1 à 13, **caractérisé en ce que** ce dernier est destiné à déclencher un élément de capot de carrosserie, un arceau de sécurité, un appuie-tête, un pare-chocs, un tendeur de ceinture ou un réglage de siège d'un véhicule automobile en cas de crash.

15. Dispositif selon au moins l'une quelconque des revendications 1 à 14, **caractérisé en ce qu'**en association avec au moins un ressort (5), ce dernier est maintenu dans un module (32) et **en ce que** le module (32) est relié à l'unité modulaire à déplacement rapide.

16. Dispositif selon la revendication 15, **caractérisé en ce que** le ressort (5) peut être précontraint.

17. Dispositif selon la revendication 15 ou 16, **caractérisé en ce que** le levier (4) de l'unité à déclencher est entourée par le module (32).
